# EUROPEAN PATENT APPLICATION

(11) **EP 4 516 381 A1**
(43) Date of publication of application: **05.03.2025**
(21) Application number: 22940367.0
(22) Date of filing: 01.07.2022
(51) Int. Cl.: B01D 53/14, B01D 47/02, B01D 47/06, B01D 53/78, B01D 53/79, B01D 45/12, B01D 63/16, C10J 3/48

(54) **CARBON DIOXIDE AND SULFUR OXIDE CAPTURE AND CARBON RESOURCE CONVERSION SYSTEM FOR INTEGRATED GASIFICATION COMBINED CYCLE**

(30) Priority: 27.04.2022 KR 20220051952
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/009521
(87) International publication number: WO 2023/210873

(57) **Abstract**

A carbon dioxide and sulfur oxide capture and carbon resource conversion system for an integrated gasification combined cycle, of the present invention, uses a basic alkali mixture solution so as to capture carbon dioxide contained in exhaust gas and converts same into a carbon resource, and thus reduces carbon dioxide while solving the problems of poor process operation efficiency and economic feasibility, and, simultaneously, can prepare sodium carbonate or sodium bicarbonate by using the captured carbon dioxide. In addition, the present invention uses sodium carbonate or sodium bicarbonate, prepared from the capture carbon dioxide, as a desulfurizing agent for capturing sulfur oxides in the exhaust gas discharged from an integrated gasification combined cycle power plant, so as to capture carbon dioxide and sulfur oxides simultaneously through a simple system, and thus it is unnecessary to provide additional flue-gas desulfurization equipment. Therefore, provision space of exhaust gas treatment equipment for removing pollutants, which are contained in gas flowing into carbon capture equipment, is minimized and process costs can be reduced.

## Description

### Technical Field

The present disclosure relates to a carbon dioxide and sulfur oxide capture and carbon resource conversion system for an integrated gasification combined cycle. More particularly, the present disclosure relates to a carbon dioxide and sulfur oxide capture and carbon resource conversion system for an integrated gasification combined cycle, the system being configured such that a basic alkali mixture solution is sprayed to an exhaust gas generated during a process of an integrated gasification combined cycle for generating electricity by gasifying coals under a high temperature and high pressure condition so that carbon dioxide is captured and the captured carbon dioxide is converted into a carbon resource, thereby being capable of capturing carbon dioxide and converting the captured carbon dioxide into other useful materials and also being capable of using the utilized materials so as to capture sulfur oxides in an exhaust gas discharged from coal-fired power generation.

### Background Art

Recently, in accordance with the Framework Convention on Climate Change for preventing global warming, and as one of alternatives to reduce emission of carbon dioxide (CO₂) that accounts for most of the greenhouse gases causing global warming, a Carbon Capture and Storage (CCS) technology is actively being researched.

As the development of such a Carbon Capture and Storage (CCS) technology is implemented in earnest, the level of carbon dioxide capture (Carbon Capture) technology is reaching the commercialization stage. Particularly, since coal has high carbon-to-hydrogen (C/H) ratio compared to other fossil fuels and emits more carbon dioxide, the carbon dioxide capture technology is urgently required to be applied to the fields of coal-fired power generation recognized as the main sources of greenhouse gas emissions.

Particularly, recently, among the fields of coal-fired power generation, an Integrated Gasification Combined Cycle (IGCC) technology, which is an eco-friendly coal-fired power generation technology and which is capable of generating not only electricity buy also hydrogen and liquefied petroleum from a coal raw material, has been very popular.

In the IGCC technology, electricity is generated by gasifying coal under a high temperature and high pressure condition. Furthermore, the IGCC technology has a higher power generation efficiency than a general thermal power plant using an existing boiler, and is particularly recognized as an environment-friendly technology, so that much research and attention have been focused thereon.

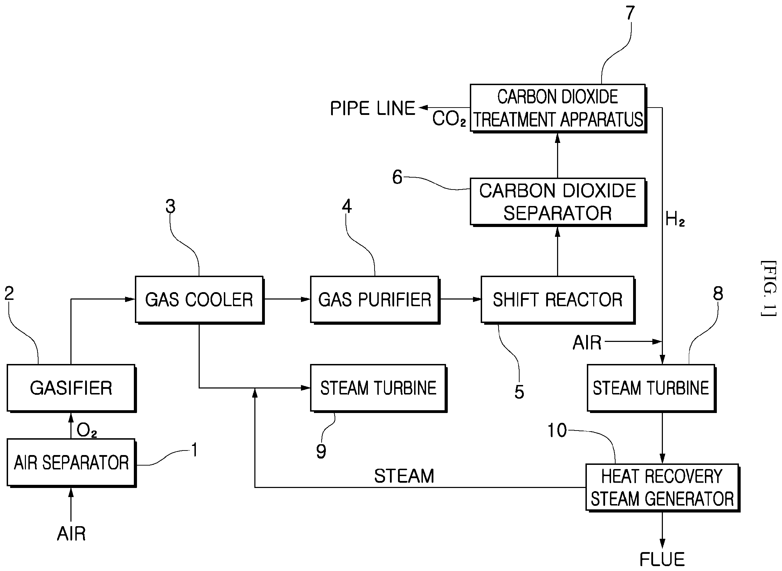

FIG. 1 is a view illustrating a conventional integrated gasification combined cycle.

According to FIG. 1, in the conventional IGCC process, oxygen and nitrogen are separated in an air separator 1 and then oxygen (O₂) is injected into a gasifier 2 so that the oxygen is used as an oxidizer. At this time, although not illustrated in the drawing, the temperature of the gasifier 2 and the composition of the generated gas are adjusted through a water gasification reaction by simultaneously injecting water vapor at a high pressure.

C + H₂O → CO + H₂

The water gasification reaction is an endothermic reaction. In the water gasification reaction, a runaway phenomenon of an internal temperature of the gasifier 2 is prevented and the fraction of hydrogen in a syngas is increased. A gas generated in the gasifier 2 has a temperature of equal to or more than 1300 degrees Celsius, has CO, H₂, and CO₂ as the main composition, and contains a small amount of CH₄ and h₂S.

In addition, the high-temperature gas is used for a steam turbine 9 by recovering sensible heat through a gas cooler 3, and also undergoes a gas purification process such as dust removal, sulfur oxide treatment, and so on through a gas purifier 4.

At this time, in the IGCC process that does not remove carbon dioxide, a purified gas is directly used as a gas turbine fuel to generate electric power, and steam is generated by using the exhaust gas discharged from a gas turbine 8 to drive a steam turbine 9.

Meanwhile, in a situation in which carbon dioxide is removed as illustrated in FIG. 1, a syngas (i.e., CO, H₂) generated through the gasifier 2 is converted such that carbon monoxide is converted into carbon dioxide and hydrogen, and then passes through a carbon dioxide separator 6 and a carbon dioxide treatment apparatus 7 that are separately mounted, so that carbon dioxide (CO₂) in the exhaust gas that is discharged to the atmosphere is removed finally.

Therefore, conventionally, carbon dioxide in the exhaust gas is capable of being removed only when sulfur oxides in the fuel gas is primarily removed in the gas purifier 4 and then the gas passes through the large-scale carbon dioxide separator 6 and the carbon dioxide treatment apparatus 7 that are separately mounted.

However, with the recent tightening of the Air Environment Conservation Act, conventional exhaust gas treatment equipment of an IGCC has shown limitations in meeting the stricter emission standards for sulfur oxides and carbon dioxide released into the atmosphere. In order to increase the purity and capacity of gas treatment, that is a problem a packing material, an internal structure, and so on of the exhaust gas treatment equipment are required to be modified and also sizes of the gas purifier, the carbon dioxide separator, and the carbon dioxide treatment apparatus are required to be increased geometrically.

Meanwhile, in a situation in which flue gas desulfurization equipment and carbon dioxide capture equipment are required to be added in exhaust gas treatment equipment of an integrated gasification combined cycle power generation plant that is already installed and operated, the exhaust gas treatment equipment cannot be used without modifying the conventional equipment, so that there is a problem that the flue gas desulfurization equipment or the carbon dioxide capture equipment is required to be applied.

As such, in order to meet the stricter emission standards for carbon dioxide and sulfur oxides released into the atmosphere from the conventional integrated gasification combined cycle, significant costs are required, and also there is a disadvantage that the entire power generation system becomes larger and more complex due to the addition of various equipment.

Therefore, there is an urgent need for a plan for efficiently reducing carbon dioxide discharged from an integrated gasification combined cycle power generation plant and for simultaneously reducing sulfur oxides with the low cost by a simple system configuration compared to that of the conventional technology.

### Disclosure

### Technical Problem

Accordingly, the present disclosure has been made keeping in mind the above problems occurring in the related art, and an objective of the present disclosure is to provide a system for reducing carbon dioxide and sulfur oxides in an exhaust gas discharged from an integrated gasification combined cycle power generation plant.

In addition, another objective of the present disclosure is to provide a carbon dioxide and sulfur oxide capture and carbon resource conversion system for an integrated gasification combined cycle, the system being configured to use a basic alkali mixture solution such that carbon dioxide in an exhaust gas is captured and converted into a carbon resource so that carbon dioxide is removed and also carbon dioxide is utilized into other useful materials.

In addition, still another objective of the present disclosure is to provide a carbon dioxide and sulfur oxide capture and carbon resource conversion system for an integrated gasification combined cycle, the system being capable of capturing carbon dioxide in an exhaust gas by using a basic alkali mixture solution, and the system being capable of using the captured carbon dioxide for capturing sulfur oxides in the exhaust gas.

The technical problems to be solved by the present disclosure are not limited to the above-mentioned problems, and other problems which are not mentioned will be clearly understood by those skilled in the art from the following description.

### Technical Solution

In order to achieve the above objectives, according to an aspect of the present disclosure, there is provided a carbon dioxide and sulfur oxide capture and carbon resource conversion system for an integrated gasification combined cycle, the system being configured to separate and utilize carbon dioxide in an integrated gasification combined cycle power generation plant and including carbon dioxide capture equipment, the integrated gasification combined cycle being configured such that an introduced air is separated into oxygen and nitrogen and then oxygen is supplied to a gasifier so that the oxygen is used as an oxidizer and some of oxygen is supplied to a gas turbine for combustion, the integrated gasification combined cycle being configured such that the gasifier generates synthetic gas by receiving and incompletely burning and gasifying carbon dioxide with the oxygen supplied from the air separator, the integrated gasification combined cycle being configured such that the gas generated in the gasifier is cooled in a gas cooler and passes through a gas purifier and a shift reactor and then is purified, and the integrated gasification combined cycle being configured such that hydrogen is separated from the purified exhaust gas and is supplied to the gas turbine so as to generate electric power, wherein the carbon dioxide capture equipment includes: a mixer configured to supply a basic alkali mixture solution; an absorption column configured to capture carbon dioxide in the exhaust gas by reacting a basic alkali mixture solution supplied from the mixer with the exhaust gas in which micro bubbles are formed by passing through a bubbler formed on a lower portion of the absorption column; a separator configured to collect a reaction product containing carbon dioxide captured in the absorption column and to separate a carbon dioxide reaction product and a waste solution from the reaction product; a carbon resource storage storing the separated carbon dioxide reaction product for utilizing the carbon dioxide reaction product; and a discharge part configured to discharge a residual exhaust gas in which carbon dioxide captured in the absorption column is removed.

In addition, according to an aspect, the mixer may be configured to generate the basic alkali mixture solution by mixing a basic alkaline solution supplied from a basic alkaline solution storage with water supplied from a water source.

In addition, according to an aspect, the basic alkaline solution and water may be mixed in a ratio of 1:1 to 1:5.

In addition, according to an aspect, an average pH of the basic alkali mixture solution may be pH 12 to pH 13.5.

In addition, according to an aspect, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the basic alkali mixture solution may be input by being adjusted through a valve in the mixer when a level of the basic alkali mixture solution in the absorption column is lowered to less than 90%, and inputting of the basic alkali mixture solution may be stopped and, at the same time, a basic alkaline solution and water may be mixed until a pH of the basic alkali mixture solution becomes pH 12 to pH 13.5 when the level of the basic alkali mixture solution becomes 100%.

In addition, according to an aspect, the bubbler may be configured to form exhaust gas micro bubbles by using the exhaust gas.

In addition, according to an aspect, the absorption column may include: a plurality of nozzles configured to spray the basic alkali mixture solution in an umbrella shape upward from the mixer in the absorption column; a micro droplet member configured such that the basic alkali mixture solution sprayed in the umbrella shape is brought into contact with pores and forms micro droplets when the basic alkali mixture solution falls downward; and a baffle having a plurality of slits or holes such that the exhaust gas is introduced with a uniform speed distribution.

In addition, according to an aspect, the carbon dioxide reaction product may include sodium carbonate (Na₂CO₃) or sodium bicarbonate (NaHCO₃).

In addition, according to an aspect, the separator may include: a centrifuge configured to separate the waste solution and the carbon dioxide reaction product containing sodium carbonate (Na₂CO₃) or sodium bicarbonate (NaHCO₃) from the reaction product; and a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

In addition, according to an aspect, the carbon dioxide capture equipment may further include: a monitoring part configured to monitor a level and a pH of the basic alkali mixture solution in the absorption column; and a controller configured to adjust a supply amount of the basic alkali mixture solution by the monitoring part.

In addition, according to an aspect, in the absorption column, carbon dioxide transferred from the shift reactor may be atomized into micro bubbles by passing through a mesh net mounted on the lower portion of the absorption column, the basic alkali mixture solution supplied inside the absorption column from the mixer through a pipe may be sprayed upwardly as a fountain shape through a plurality of nozzles which is mounted on a first side of the pipe and which is disposed to be spaced apart from each other at a predetermined distance and then the basic alkali mixture solution may be atomized into micro droplets, and carbon dioxide may be captured as the basic alkali mixture solution that is atomized reacts with carbon dioxide that is atomized, the pipe being mounted such that the pipe crosses an upper portion of the absorption column.

In addition, according to an aspect, a valve may further be provided between the separator and the carbon resource storage. Furthermore, the captured carbon dioxide reaction product may be moved and stored in the carbon resource storage or may be resupplied to the absorption column by the valve, so that the captured carbon dioxide reaction product may be used as a desulfurizing agent reducing sulfur oxides contained in the exhaust gas by capturing the sulfur oxides.

In order to achieve the above objectives, according to another aspect of the present disclosure, there is provided a carbon dioxide and sulfur oxide capture and carbon resource conversion system for an integrated gasification combined cycle, the system being configured to separate and utilize carbon dioxide in an integrated gasification combined cycle power generation plant and including carbon dioxide capture equipment, the integrated gasification combined cycle being configured such that an introduced air is separated into oxygen and nitrogen and then oxygen is supplied to a gasifier so that the oxygen is used as an oxidizer and some of oxygen is supplied to a gas turbine for combustion, the integrated gasification combined cycle being configured such that the gasifier generates synthetic gas by receiving and incompletely burning and gasifying carbon dioxide with the oxygen supplied from the air separator, the integrated gasification combined cycle being configured such that the gas generated in the gasifier is cooled in a gas cooler and passes through a gas purifier and a shift reactor and then is purified, and the integrated gasification combined cycle being configured such that hydrogen is separated from the purified exhaust gas and is supplied to the gas turbine so as to generate electric power, wherein the carbon dioxide capture equipment includes: a mixer configured to supply a basic alkali mixture solution; an absorption column configured to capture carbon dioxide in the exhaust gas by reacting the basic alkali mixture solution supplied from the mixer with the exhaust gas in which micro bubbles are formed by passing through a bubbler formed on a lower portion of the absorption column; a separator configured to collect a reaction product containing carbon dioxide captured in the absorption column and to separate a carbon dioxide reaction product and a waste solution from the reaction product; a carbon resource storage storing the separated carbon dioxide reaction product for utilizing the carbon dioxide reaction product; a discharge part configured to discharge a residual exhaust gas in which carbon dioxide captured in the absorption column is removed; and a valve provided between the separator and the carbon resource storage, and wherein the captured carbon dioxide reaction product is moved and stored in the carbon resource storage or is resupplied to the absorption column by the valve, so that the captured carbon dioxide reaction product is used as a desulfurizing agent reducing sulfur oxides contained in the exhaust gas by capturing the sulfur oxides.

In addition, according to another aspect, the mixer may be configured to generate the basic alkali mixture solution by mixing a basic alkaline solution supplied from a basic alkaline solution storage with water supplied from a water source.

In addition, according to another aspect, the basic alkaline solution and water may be mixed in a ratio of 1:1 to 1:5.

In addition, according to another aspect, an average pH of the basic alkali mixture solution may be pH 12 to pH 13.5.

In addition, according to another aspect, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to another aspect, the basic alkali mixture solution may be input by being adjusted through a valve in the mixer when a level of the basic alkali mixture solution in the absorption column is lowered to less than 90%, and inputting of the basic alkali mixture solution may be stopped and, at the same time, a basic alkaline solution and water may be mixed until a pH of the basic alkali mixture solution becomes pH 12 to pH 13.5 when the level of the basic alkali mixture solution becomes 100%.

In addition, according to another aspect, the bubbler may be configured to form exhaust gas micro bubbles by using the exhaust gas.

In addition, according to another aspect, the absorption column may include: a plurality of nozzles configured to spray the basic alkali mixture solution in an umbrella shape upward from the mixer in the absorption column; a micro droplet member configured such that the basic alkali mixture solution sprayed in the umbrella shape is brought into contact with pores and forms micro droplets when the basic alkali mixture solution falls downward; and a baffle having a plurality of slits or holes such that the exhaust gas is introduced with a uniform speed distribution.

In addition, according to another aspect, the carbon dioxide reaction product may include sodium carbonate (Na₂CO₃) or sodium bicarbonate (NaHCO₃).

In addition, according to another aspect, the separator may include: a centrifuge configured to separate the waste solution and the carbon dioxide reaction product containing sodium carbonate (Na₂CO₃) or sodium bicarbonate (NaHCO₃) from the reaction product; and a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

In addition, according to another aspect, the carbon dioxide capture equipment may further include: a monitoring part configured to monitor a level and a pH of the basic alkali mixture solution in the absorption column; and a controller configured to adjust a supply amount of the basic alkali mixture solution by the monitoring part.

In addition, according to another aspect, in the absorption column, carbon dioxide transferred from the shift reactor may be atomized into micro bubbles by passing through a mesh net mounted on the lower portion of the absorption column, the basic alkali mixture solution supplied inside the absorption column from the mixer through a pipe may be sprayed upwardly as a fountain shape through a plurality of nozzles which is mounted on a first side of the pipe and which is disposed to be spaced apart from each other at a predetermined distance and then the basic alkali mixture solution may be atomized into micro droplets, and carbon dioxide may be captured as the basic alkali mixture solution that is atomized reacts with carbon dioxide that is atomized, the pipe being mounted such that the pipe crosses an upper portion of the absorption column.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, there are effects that carbon dioxide is capable of being reduced by capturing carbon dioxide in an exhaust gas discharged during a process of the integrated gasification combined cycle, and sodium carbonate or sodium bicarbonate, which is a useful resource, is capable of being manufactured by using the captured carbon dioxide.

In addition, according to an embodiment of the present disclosure, since sodium carbonate or sodium bicarbonate manufactured from the captured carbon dioxide is utilized such that sodium carbonate or sodium bicarbonate is used as a desulfurizing agent capturing sulfur oxides in the exhaust gas discharged from the process of the integrated gasification combined cycle, carbon dioxide and sulfur oxides are capable of being captured simultaneously through the simple system configuration. Accordingly, since there is no need to mount additional flue gas desulfurization equipment, the installation space of the desulfurization equipment for removing pollutants contained in gas introduced into the carbon dioxide capture equipment may be minimized, and the process cost may be reduced.

### Description of Drawings

FIG. 1 is a view illustrating a conventional integrated gasification combined cycle.
FIG. 2 is a view illustrating an integrated gasification combined cycle to which a system of the present disclosure is applied.
FIG. 3 is a view illustrating carbon dioxide capture equipment according to an embodiment of the present disclosure.
FIG. 4 is a view illustrating carbon dioxide and sulfur oxide capture equipment according to an embodiment of the present disclosure.
FIG. 5 is a view schematically illustrating an internal configuration of an absorption column for increasing carbon dioxide and sulfur oxide capture performance of carbon dioxide capture equipment according to an embodiment of the present disclosure.
FIG. 6 is a view schematically illustrating the internal configuration of the absorption column for increasing carbon dioxide and sulfur oxide capture performance of the carbon dioxide capture equipment according to another embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

The present disclosure relates to a carbon dioxide and sulfur oxide capture and carbon resource conversion system for an integrated gasification combined cycle, the system being configured to reduce carbon dioxide and sulfur oxides in an exhaust gas generated in a coal-fired power generation plant.

Hereinafter, a carbon dioxide and sulfur oxide capture and carbon resource conversion system for an integrated gasification combined cycle according to an embodiment of the present disclosure will be described in more detail with reference to the following drawings.

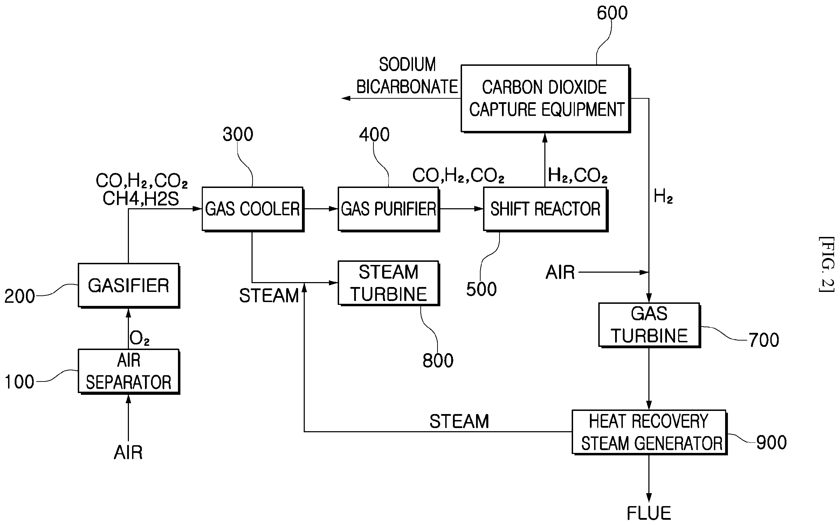

FIG. 2 is a view illustrating an integrated gasification combined cycle to which a system of the present disclosure is applied.

Referring to FIG. 2, the integrated gasification combined cycle according to the present disclosure is provided with an air separator 100 configured to separate introduced air into oxygen and nitrogen and then to supply oxygen to a gasifier 200 so that the oxygen is used as an oxidizer and to supply some of the oxygen to a gas turbine 700 so that the oxygen is used for combustion.

In addition, the integrated gasification combined cycle according to the present disclosure is provided with the gasifier 200 configured to generate synthetic gas (CO, H₂, CO₂, CH₄, and so on) by incompletely burning and gasifying carbon dioxide with limited oxygen supplied from the air separator 100.

In addition, the integrated gasification combined cycle according to the present disclosure is provided with a gas cooler 300 configured to provide steam to a steam turbine 800 while cooling and transferring the gas generated from the gasifier 200 to a gas purifier 400.

In addition, the integrated gasification combined cycle according to the present disclosure is provided with a shift reactor 500 configured to convert CO to CO₂ and H₂ by applying a water gas conversion reaction to a product gas which is cooled by the gas cooler 300 and in which dusts and sulfur oxides are primarily removed by the gas purifier 400.

In addition, the integrated gasification combined cycle according to the present disclosure is provided with carbon dioxide capture equipment 600 configured to receive an exhaust gas transferred through the shift reactor 500, i.e., to receive water gas (hydrogen, carbon dioxide, and a trace amount of methane are the main components), and to separate carbon dioxide and sulfur oxides from the water gas.

In addition, hydrogen gas in which carbon dioxide and sulfur oxides are removed from the carbon dioxide capture equipment 600 is a fuel, and the fuel is supplied to the gas turbine 700, thereby generating electric power. The gas turbine 700 is driven by hydrogen (H₂) gas provided from the carbon dioxide capture equipment 600 and oxygen (O₂) provided from the air separator 100. At this time, from the gas turbine 700, an exhaust gas in which water is the main component is finally discharged to the outside.

In addition, the integrated gasification combined cycle according to the present disclosure is provided with a waste heat recovery boiler 900 configured to recover exhaust heat (waste heat) of the exhaust gas discharged from the gas turbine 700 and to supply the exhaust heat to a steam turbine 800 and to discharge the exhaust gas to a flue.

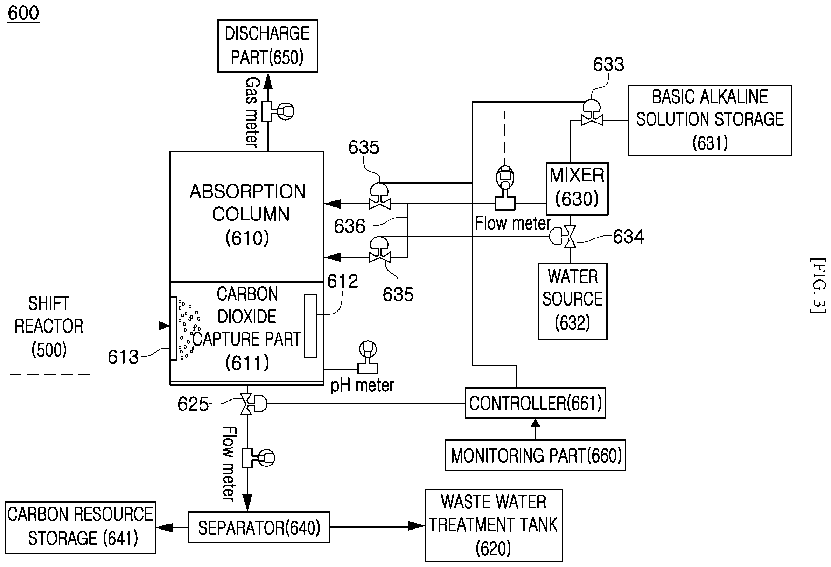

FIG. 3 is a view illustrating carbon dioxide capture equipment according to an embodiment of the present disclosure.

Referring to FIG. 3, the carbon dioxide capture equipment 600 is equipment configured to capture carbon dioxide contained in an exhaust gas generated during a process of an integrated gasification combined cycle using a basic alkaline solution, i.e., to capture carbon dioxide contained in water gas transferred from the shift reactor 500. The carbon dioxide capture equipment 600 includes an absorption column 610, a carbon dioxide capture part 611, a mixer 630, a separator 640, a carbon resource storage 641, and a discharge part 650.

The absorption column 610 may refer to a facility, a building, facility, and so on configured to capture carbon dioxide in water gas in which sulfur oxides are primarily removed by the gas purifier 400, or configured to secondarily remove sulfur oxides in addition to carbon dioxide.

In addition, the carbon dioxide capture part 611 positioned on a lower end of the absorption column 610 is a portion of the absorption column 610, and may refer to a portion that captures carbon dioxide by bubbling an exhaust gas.

The absorption column 610 includes the carbon dioxide capture part 611 positioned at the lower end of the absorption column 610 and configured to capture carbon dioxide in water gas in which sulfur oxides are removed by the gas purifier 400, and is configured to capture only carbon dioxide in water gas by reacting a basic alkali mixture solution with the water gas (micro bubbles of the water gas). After carbon dioxide in the water gas is captured, the water gas in which carbon dioxide is removed may remain in a gaseous state in the absorption column 610.

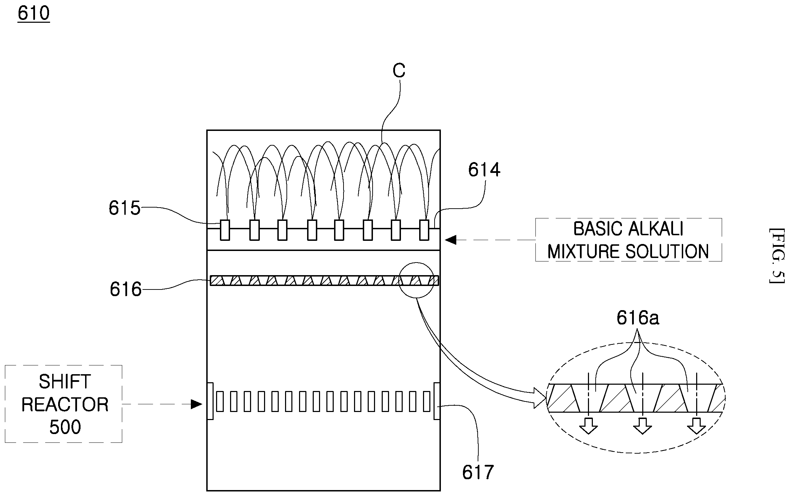

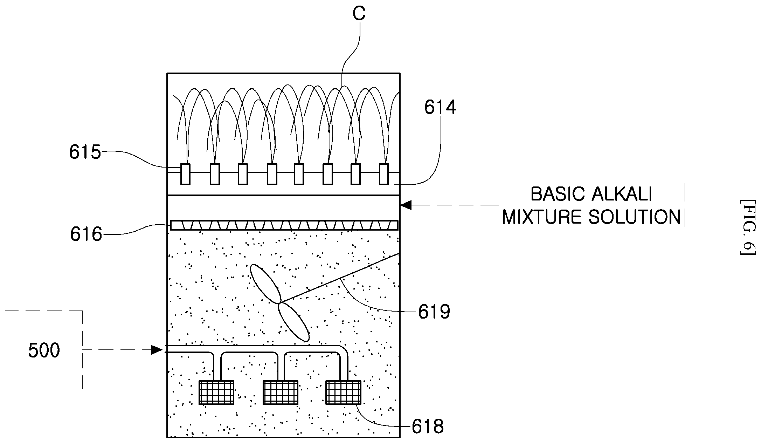

In the absorption column 610, a nozzle (see reference numeral 615 in FIG. 5 or FIG. 6) is installed on an upper portion of the absorption column 610, and a basic alkali mixture solution is sprayed into the absorption column 610 through the nozzle (see reference numeral 615 in FIG. 5 or FIG. 6) from the mixer 630, and the basic alkali mixture solution is collected on the carbon dioxide capture part 611 at the lower end of the absorption column 610. At the same time as the basic alkali mixture solution is sprayed, water gas supplied from the shift reactor 500 passes through a bubbler 613 in the carbon dioxide capture part 611 at the lower portion of the absorption column 610, the exhaust gas in which micro bubbles are formed is supplied, and the basic alkali mixture solution and the micro bubbles of the exhaust gas react with each other within the carbon dioxide capture part 611, so that carbon dioxide is captured. When the exhaust gas reacts with the basic alkali mixture solution, the micro bubbles are formed while the exhaust gas passes through the bubbler 613 having fine holes formed on an outlet of the shift reactor 500.

As the water gas supplied from the shift reactor 500 passes through the bubbler 613, the bubbler 613 may form the micro bubbles in the water gas. Furthermore, the smaller the size of the micro bubbles, the larger the reaction area of the water gas and the alkaline solution, so that the carbon dioxide capture ability may be increased. For example, the micro bubbles may refer to bubbles which have a size about equal to or less than 50 *µ*m and which exist in an aqueous solution.

Meanwhile, an internal configuration of the absorption column may be provided to further improve the carbon dioxide capture performance of the carbon dioxide capture equipment. The internal configuration of the absorption column will be described later in detail in FIG 6 and FIG. 6.

In addition, the absorption column 610 may include a level indicator 612 inside the absorption column 610, so that a level of a solution in the absorption column 610 is capable of being detected.

The nozzle (see reference numeral 615 in FIG. 5 or FIG. 6) may include a plurality of nozzles, and may be formed of at least one stage. The nozzle 615 (see reference numeral FIG. 5 or FIG. 6) is connected to the mixer 630 and may supply a basic alkali mixture solution from the mixer 630.

The absorption columns 610 may be configured in series, in parallel, or in a series and parallel complex arrangement.

For example, the absorption columns 610 may be arranged in series when the flow velocity of the exhaust gas is high. When carbon dioxide unreacted due to a high flow velocity is discharged from the absorption columns, the absorptions column may be mounted in series so as to capture the unreacted carbon dioxide.

In addition, for example, the absorption column 610 may be arranged in parallel when the flow rate of the exhaust gas is large. When the flow rate of the exhaust gas exceeds the amount that the absorption column can capture, the amount of carbon dioxide that can be captured may be increased by arranging the absorption column in parallel.

The shift reactor 500 may contain all gases including carbon dioxide, and may be, for example, a power plant exhaust gas or an engine exhaust gas in addition to the water gas described above.

The mixer 630 mixes a basic alkaline solution supplied from a basic alkaline solution storage 631 with water supplied from a water source 632, and supplies the mixture to the nozzle (see reference numeral 615 in FIG. 5 or FIG. 6) of the absorption column 610.

A basic alkali mixture solution in which the basic alkaline solution and water are mixed with each other may be supplied by using a separately connected bypass line 636 when a supply amount or a required amount of the basic alkali mixture solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixture solution mixing ratio of the basic alkaline solution and water is increased, but the mixing ratio of water may be adjusted in consideration of the cost aspect.

The basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water source 632 may include all water that may be easily acquired at a system installation site, and water may be seawater as an example.

An average pH of the basic alkali mixture solution may be at least pH 12. For example, the pH may be pH 12 to pH 13.5, pH 13, pH 12, pH 12.1, pH 12.2, or pH 12.3. The pH of the basic alkali mixture solution may be measured by a pH meter in the absorption column 610, and carbon dioxide cannot be captured anymore when the pH of the basic alkali mixture solution in the absorption column 610 is less than pH 10.5. Therefore, in order to adjust the pH of the basic alkali mixture solution, the basic alkaline solution and water may be supplied to the mixer 630 by adjusting the amount of the basic alkaline solution and the amount of water from zero to 100% by each valve 633 and 634.

When the level of the basic alkali mixture solution in the absorption column 610 is lower than 90% (measured by the level indicator), the input may be adjusted through a valve 635 at the mixer 630 so that the basic alkali mixture solution is input. Furthermore, when the level of the solution reaches 100%, the input of the solution may be stopped. At the same time, the basic alkaline solution and water may be mixed until the pH of the basic alkali mixture solution becomes pH 12 to pH 13.5.

Since the amount of basic alkali mixture solution supplied to the absorption column 610 and the amount of the solution discharged from the separator 640 are the same, the carbon dioxide capture equipment is capable of being continuously maintained. Therefore, the valve (including a bypass valve if necessary) 635 is adjusted so that the same amount of the basic alkali mixture solution as a value of a flow meter mounted in the line from the absorption column 610 to the separator 640 is supplied to the absorption column 610, thereby making the net flow to zero.

A reaction product containing carbon dioxide captured by reacting the basic alkali mixture solution and the water gas that is introduced from the shift reactor 500 with each other is collected in the carbon dioxide capture part 611 of the absorption column 610, a carbon dioxide reaction product and a waste solution from the reaction product are moved to the separator 640 through a valve 625, and the carbon dioxide reaction product and the waste solution are separated from the reaction product.

The separator 640 may include a centrifuge configured to separate the waste solution and the carbon dioxide reaction product containing sodium carbonate (Na₂CO₃) or sodium bicarbonate (NaHCO₃) from the reaction product, and may include a vibration separation membrane formed corresponding to a size of an inner circumference of a discharge pipe for discharging only sodium bicarbonate in the carbon dioxide reaction product separated from the centrifuge, the vibration separation membrane having a surface provided with fine holes such that carbon bicarbonate is capable of passing therethrough. Through this, a high purity sodium bicarbonate can be acquired and can be sold immediately, so that a profit may be realized.

The size of the fine holes formed in the vibration separation membrane may be 10 *µ*m to 20 *µ*m, and the vibration separation membrane may further include a vibration generation part so as to induce vibration in the vibration separation membrane. The vibration generation part may be disposed so as to prevent the fine holes from being blocked by sodium bicarbonate.

The separated carbon dioxide reaction product may be moved to the carbon resource storage 641, and may be recycled so as to be utilized for other purposes. For example, the carbon dioxide reaction product may include sodium carbonate (Na₂CO₃) or sodium bicarbonate (NaHCO₃).

As described in Formula 1 below, the carbon dioxide reaction product may be formed by reacting the basic alkali mixture solution with carbon dioxide.

<Formula 1> 2NaOH + CO₂ → Na₂CO₃ + H₂O Na₂CO₃ + H₂O + CO₂ → 2NaHCO₃

In the reaction product, a waste solution other than a carbon dioxide reaction product is moved to a wastewater treatment tank 620 and then is discarded. For example, the waste solution may contain illite minerals, water, and so on that are contained in the basic alkali mixture solution that has finished a catalyst function.

The carbon resource storage 641 is a carbon dioxide reaction product storage in which each environment on the ground, in the ground, and in the sea is considered, is capable of stably and efficiently storing a carbon resource that is a carbon dioxide capture reaction product in a space larger than a conventional carbon dioxide storing apparatus and, at the same time, is capable of reducing the manufacturing cost, and may be implemented such that the stored carbon resource is capable of being utilized later when the stored carbon resource is required.

For example, the carbon resource storage considering the environment on the ground may include a storage tank which is configured to accommodate the carbon dioxide reaction product and which has a double wall structure of an inner wall and an outer wall, an inlet unit configured to load the carbon dioxide reaction product into the storage tank, a discharge unit connected to the storage tank and configured to unload the carbon dioxide reaction product in the storage tank, and a control unit configured to maintain a constant vacuum state of the carbon dioxide reaction product accommodated inside the storage tank or configured to control the inlet unit and the discharge unit during loading/unloading of the carbon dioxide reaction product.

Meanwhile, the carbon resource storage considering the environment in the ground may use an underground reservoir instead of the storage tank of the carbon resource storage considering the environment on the ground. Furthermore, in order for storing a carbon dioxide capture reaction product generated in a coal-fired power generation plant, the carbon dioxide capture reaction product may be moved to an offshore structure such as an LNF FPSO, an LNG FSRU, an LNG transport ship, an LNG RV, and so on by using a transporting apparatus, and then may be stored.

The residual exhaust gas in which carbon dioxide is removed after carbon dioxide is captured in the carbon dioxide capture part 611 is discharged through the discharge part 650. For example, the residual exhaust gas discharged through the discharge part 650 may include the exhaust gas in which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The carbon dioxide capture equipment 600 may further include: a monitoring part 660 configured to monitor a level and a pH of the basic alkali mixture solution in the absorption column 610; and a controller 661 configured to adjust a supply amount of the basic alkali mixture solution by the monitoring part 660.

Values of a gas meter, a pH meter, and a flow meter measured in all processes of the carbon dioxide capture equipment 600 are managed in the monitoring part 660, and the controller 661 performs adjustment on the basis of the values represented by the monitoring part 660. The valves 625, 633, 634, and 635 may be adjusted in terms of percentage with respect to values input from the controller 661.

In the carbon dioxide and sulfur oxide capture and carbon resource conversion system for the integrated gasification combined cycle according to an embodiment of the present disclosure, since only carbon dioxide in an exhaust gas discharged from an integrated gasification combined cycle power plant is captured, carbon dioxide is capable of being reduced while a problem of low process operation efficiency and reduction in economic feasibility of a conventional technology is solved, and the captured carbon dioxide may be recycled into other useful materials by converting the captured carbon dioxide into sodium carbonate or sodium bicarbonate.

As described above, in the carbon dioxide and sulfur oxide capture and carbon resource conversion system according to an embodiment of the present disclosure, since carbon dioxide in an exhaust gas discharged from an integrated gasification combined cycle power plant is captured, carbon dioxide is capable of being reduced, and sodium carbonate or sodium bicarbonate may be manufactured by using the captured carbon dioxide.

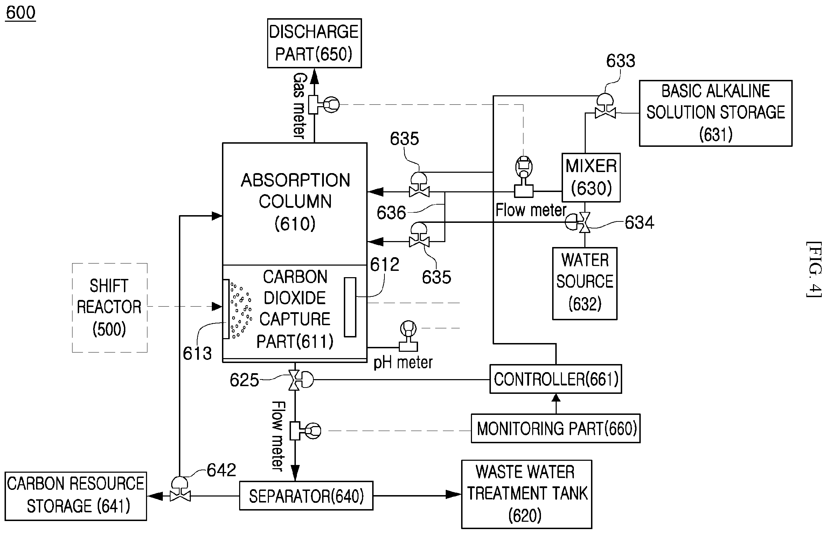

FIG. 4 is a view illustrating carbon dioxide and sulfur oxide capture equipment according to an embodiment of the present disclosure.

Referring to FIG. 4, in addition to the carbon dioxide capture equipment in FIG. 3, in order to capture sulfur oxides, a valve 642 and a resupply flow path (without reference numeral) may be further provided between the separator 640 and the carbon resource storage 641.

Accordingly, as the captured carbon dioxide reaction product is moved and stored in the carbon resource storage 641 or is resupplied to the absorption column 610 by the valve 642, the carbon dioxide reaction product is capable of being used for reducing (secondary removal) sulfur oxides contained in the water gas.

The carbon dioxide reaction product and sulfur oxides in the water gas may be captured by being reacted as described in Formula 3 below.

<Formula 3> 2NaHCO₃ + SO₂ + 1/2 O₂ → Na₂SO₄ + 2CO₂ + H₂O Na₂CO₃ + SO₂ + 1/2 O₂ → Na₂SO₄ + 2CO₂

After the capture of sulfur oxides is finished in the absorption column 610, a solution containing the captured sulfur oxides existing in the absorption column 610, the carbon dioxide reaction product, and the water gas or the remaining exhaust gas in which carbon dioxide and sulfur oxides are removed may be discharged to the outside through the discharge part 650.

Specifically, a material discharged to the discharge part 650 may be the residual exhaust gas (N₂, O₂, and so on) in which carbon dioxide and sulfur oxides are removed and sodium sulfate (Na₂SO₄) that is generated when sulfur oxides are removed by a reaction between the carbon dioxide reaction product and sulfur oxides, and sodium sulfate may be in a solid state in which the size of particles is very small and may float in the residual exhaust gas and may be discharged together with the residual exhaust gas.

At this time, since the concentration of carbon dioxide or sulfur oxides cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide or sulfur oxides in the atmosphere to which the residual exhaust gas is discharged.

For example, the solution containing the captured sulfur oxide may be sodium sulfate (Na₂SO₄), and the carbon dioxide reaction product may be sodium carbonate (Na₂CO₃) or sodium bicarbonate (NaHCO₃).

In the carbon dioxide and sulfur oxide capture and carbon resource conversion system for the integrated gasification combined cycle according to the present disclosure, since carbon dioxide in the exhaust gas discharged from the integrated gasification combined cycle power plant is captured, carbon dioxide is capable of being reduced, and sodium carbonate or sodium bicarbonate is capable of being manufactured by using the captured carbon dioxide.

In addition, since sodium carbonate or sodium bicarbonate manufactured from the captured carbon dioxide is utilized such that sodium carbonate or sodium bicarbonate is used as a desulfurizing agent capturing sulfur oxides in the exhaust gas discharged from the integrated gasification combined cycle power plant, carbon dioxide and sulfur oxides are capable of being captured simultaneously through one carbon dioxide capture equipment 600.

Therefore, without modifying a conventional flue-gas desulfurization equipment or introducing an additional flue-gas desulfurization equipment, carbon dioxide discharged from the integrated gasification combined cycle power plant may be efficiently reduced and also sulfur oxides are capable of being reduced with the low cost by the simple system configuration compared to that of a conventional technology.

In the embodiment described above, a carbon resource conversion system of the present disclosure in which carbon dioxide and sulfur oxides are captured is described. Except for the valve 642 and the resupply flow path (without reference numeral) that extends from the valve 642 to the absorption column, which are added for capturing sulfur oxides, the remaining configuration is the same as the configuration illustrated in FIG. 3, so that the description thereof will be omitted.

FIG. 5 is a view schematically illustrating an internal configuration of an absorption column for increasing carbon dioxide and sulfur oxide capture performance of carbon dioxide capture equipment according to an embodiment of the present disclosure.

Referring to FIG. 5, in the internal configuration of the absorption column 610 according to an embodiment of the present disclosure, the absorption column 610 may further include the plurality of nozzles 615 provided at a pipe 614 configured to discharge the basic alkali mixture solution upward in an umbrella shape C from the mixer 630 in the absorption column 610, a micro droplet member 616 configured such that the basic alkali mixture solution discharged in the umbrella shape C forms micro droplets when the basic alkali mixture solution falls downward and is in contact with pores 616a, and a baffle 617 having a plurality of slits or holes such that water gas containing carbon dioxide is introduced into the absorption column 610 with a uniform speed distribution.

Specifically, the basic alkali mixture solution falls downward in the absorption column 610 through the plurality of nozzles 615 configured to discharge the basic alkali mixture solution in the umbrella shape C, is in contact with the pores 616a of the micro droplet member 616 and droplets are formed, and the basic alkali mixture solution is in contact with the exhaust gas formed as fine particles by passing through the baffles 617 having the plurality of slits or holes, so that carbon dioxide and sulfur oxide capture performance of the carbon dioxide capture equipment may be increased.

FIG. 6 is a view schematically illustrating the internal configuration of the absorption column for increasing carbon dioxide and sulfur oxide capture performance of the carbon dioxide capture equipment according to another embodiment of the present disclosure.

Referring to FIG. 6, in the internal configuration of the absorption column 610 according to another embodiment of the present disclosure, in addition to the configuration according to an embodiment illustrated in FIG. 4, a configuration for promoting a reaction between carbon dioxide and the basic alkali mixture solution may be added.

In the absorption column 610 according to another embodiment, carbon dioxide transferred from the shift reactor 500 passes through a mesh net 618 mounted on the lower portion of the absorption column 610, and is atomized into micro bubbles.

In addition, the basic alkali mixture solution supplied to the inside of the absorption column 610 from the mixer (see reference numeral 630 in FIG. 3 or FIG. 4) through the pipe 614 is sprayed upwardly as a fountain shape through the plurality of nozzles 615 mounted on a first side of the pipe 614 by being spaced apart from each other at a predetermined distance, and then is atomized into micro droplets, the pipe 614 being mounted such that the pipe 614 crosses the upper portion of the absorption column 610.

In addition, the micro droplet member 616 may be further provided between the mesh net 618 and the pipe 614 so as to allow micro droplets in the atomized basic alkali mixture solution having a size smaller than a predetermined size to pass therethrough.

As previously described in an embodiment in FIG. 5, micro bubbles and micro droplets generated by the mesh net 618 and the micro droplet member 616 may increase a reaction surface area between carbon dioxide and the alkaline solution as the size of the micro bubbles and micro droplets decrease, thereby being capable of increasing the carbon dioxide capture performance. For example, the micro bubbles and the micro droplets may have a size of about 50 µm or less.

Then, as described above, the basic alkali mixture solution atomized into the micro droplets actively captures carbon dioxide as the reaction is promoted through contact with the atomized carbon dioxide which has been atomized by the mesh net 618.

In addition, an agitator 619 for promoting the reaction by increasing the fluidity of the atomized carbon dioxide and the atomized basic alkali mixture solution may further be provided between the mesh 618 and the pipe 614.

The agitator 619 may further promote the reaction between the two materials by increasing the retention time and the contact time of the atomized basic alkali mixture solution and the atomized carbon dioxide by being rotated in a propeller shape.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all respects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may be widely used in the fields of carbon dioxide and sulfur oxide capture and carbon resource conversion system for an integrated gasification combined cycle.

## Claims

1. A carbon dioxide and sulfur oxide capture and carbon resource conversion system for an integrated gasification combined cycle, the system being configured to separate and utilize carbon dioxide in an integrated gasification combined cycle power generation plant and comprising carbon dioxide capture equipment, the integrated gasification combined cycle being configured such that an introduced air is separated into oxygen and nitrogen and then oxygen is supplied to a gasifier so that the oxygen is used as an oxidizer and some of oxygen is supplied to a gas turbine for combustion, the integrated gasification combined cycle being configured such that the gasifier generates synthetic gas by receiving and incompletely burning and gasifying carbon dioxide with the oxygen supplied from the air separator, the integrated gasification combined cycle being configured such that the gas generated in the gasifier is cooled in a gas cooler and passes through a gas purifier and a shift reactor and then is purified, and the integrated gasification combined cycle being configured such that hydrogen is separated from the purified exhaust gas and is supplied to the gas turbine so as to generate electric power,
wherein the carbon dioxide capture equipment comprises:
a mixer configured to supply a basic alkali mixture solution;
an absorption column configured to capture carbon dioxide in the exhaust gas by reacting a basic alkali mixture solution supplied from the mixer with the exhaust gas in which micro bubbles are formed by passing through a bubbler formed on a lower portion of the absorption column;
a separator configured to collect a reaction product containing carbon dioxide captured in the absorption column and to separate a carbon dioxide reaction product and a waste solution from the reaction product;
a carbon resource storage storing the separated carbon dioxide reaction product for utilizing the carbon dioxide reaction product; and
a discharge part configured to discharge a residual exhaust gas in which carbon dioxide captured in the absorption column is removed.

2. The system of claim 1, wherein the mixer is configured to generate the basic alkali mixture solution by mixing a basic alkaline solution supplied from a basic alkaline solution storage with water supplied from a water source.

3. The system of claim 2, wherein the basic alkaline solution and water are mixed in a ratio of 1:1 to 1:5.

4. The system of claim 1, wherein an average pH of the basic alkali mixture solution is pH 12 to pH 13.5.

5. The system of claim 1, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

6. The system of claim 1, wherein the basic alkali mixture solution is input by being adjusted through a valve in the mixer when a level of the basic alkali mixture solution in the absorption column is lowered to less than 90%, and inputting of the basic alkali mixture solution is stopped and, at the same time, a basic alkaline solution and water are mixed until a pH of the basic alkali mixture solution becomes pH 12 to pH 13.5 when the level of the basic alkali mixture solution becomes 100%.

7. The system of claim 1, wherein the bubbler is configured to form exhaust gas micro bubbles by using the exhaust gas.

8. The system of claim 1, wherein the absorption column comprises:
a plurality of nozzles configured to spray the basic alkali mixture solution in an umbrella shape upward from the mixer in the absorption column;
a micro droplet member configured such that the basic alkali mixture solution sprayed in the umbrella shape is brought into contact with pores and forms micro droplets when the basic alkali mixture solution falls downward; and
a baffle having a plurality of slits or holes such that the exhaust gas is introduced with a uniform speed distribution.

9. The system of claim 1, wherein the carbon dioxide reaction product comprises sodium carbonate (Na₂CO₃) or sodium bicarbonate (NaHCO₃).

10. The system of claim 1, wherein the separator comprises:
a centrifuge configured to separate the waste solution and the carbon dioxide reaction product containing sodium carbonate (Na₂CO₃) or sodium bicarbonate (NaHCO₃) from the reaction product; and
a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

11. The system of claim 1, wherein the carbon dioxide capture equipment further comprises:
a monitoring part configured to monitor a level and a pH of the basic alkali mixture solution in the absorption column; and
a controller configured to adjust a supply amount of the basic alkali mixture solution by the monitoring part.

12. The system of claim 1, wherein, in the absorption column, carbon dioxide transferred from the shift reactor is atomized into micro bubbles by passing through a mesh net mounted on the lower portion of the absorption column, the basic alkali mixture solution supplied inside the absorption column from the mixer through a pipe is sprayed upwardly as a fountain shape through a plurality of nozzles which is mounted on a first side of the pipe and which is disposed to be spaced apart from each other at a predetermined distance and then the basic alkali mixture solution is atomized into micro droplets, and carbon dioxide is captured as the basic alkali mixture solution that is atomized reacts with carbon dioxide that is atomized, the pipe being mounted such that the pipe crosses an upper portion of the absorption column.

13. A carbon dioxide and sulfur oxide capture and carbon resource conversion system for an integrated gasification combined cycle, the system being configured to separate and utilize carbon dioxide in an integrated gasification combined cycle power generation plant and comprising carbon dioxide capture equipment, the integrated gasification combined cycle being configured such that an introduced air is separated into oxygen and nitrogen and then oxygen is supplied to a gasifier so that the oxygen is used as an oxidizer and some of oxygen is supplied to a gas turbine for combustion, the integrated gasification combined cycle being configured such that the gasifier generates synthetic gas by receiving and incompletely burning and gasifying carbon dioxide with the oxygen supplied from the air separator, the integrated gasification combined cycle being configured such that the gas generated in the gasifier is cooled in a gas cooler and passes through a gas purifier and a shift reactor and then is purified, and the integrated gasification combined cycle being configured such that hydrogen is separated from the purified exhaust gas and is supplied to the gas turbine so as to generate electric power,
wherein the carbon dioxide capture equipment comprises:
a mixer configured to supply a basic alkali mixture solution;
an absorption column configured to capture carbon dioxide in the exhaust gas by reacting the basic alkali mixture solution supplied from the mixer with the exhaust gas in which micro bubbles are formed by passing through a bubbler formed on a lower portion of the absorption column;
a separator configured to collect a reaction product containing carbon dioxide captured in the absorption column and to separate a carbon dioxide reaction product and a waste solution from the reaction product;
a carbon resource storage storing the separated carbon dioxide reaction product for utilizing the carbon dioxide reaction product;
a discharge part configured to discharge a residual exhaust gas in which carbon dioxide captured in the absorption column is removed; and
a valve provided between the separator and the carbon resource storage, and
wherein the captured carbon dioxide reaction product is moved and stored in the carbon resource storage or is resupplied to the absorption column by the valve, so that the captured carbon dioxide reaction product is used as a desulfurizing agent reducing sulfur oxides contained in the exhaust gas by capturing the sulfur oxides.

14. The system of claim 13, wherein the mixer is configured to generate the basic alkali mixture solution by mixing a basic alkaline solution supplied from a basic alkaline solution storage with water supplied from a water source.

15. The system of claim 14, wherein the basic alkaline solution and water are mixed in a ratio of 1:1 to 1:5.

16. The system of claim 13, wherein an average pH of the basic alkali mixture solution is pH 12 to pH 13.5.

17. The system of claim 13, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

18. The system of claim 13, wherein the basic alkali mixture solution is input by being adjusted through a valve in the mixer when a level of the basic alkali mixture solution in the absorption column is lowered to less than 90%, and inputting of the basic alkali mixture solution is stopped and, at the same time, a basic alkaline solution and water are mixed until a pH of the basic alkali mixture solution becomes pH 12 to pH 13.5 when the level of the basic alkali mixture solution becomes 100%.

19. The system of claim 13, wherein the bubbler is configured to form exhaust gas micro bubbles by using the exhaust gas.

20. The system of claim 13, wherein the absorption column comprises:
a plurality of nozzles configured to spray the basic alkali mixture solution in an umbrella shape upward from the mixer in the absorption column;
a micro droplet member configured such that the basic alkali mixture solution sprayed in the umbrella shape is brought into contact with pores and forms micro droplets when the basic alkali mixture solution falls downward; and
a baffle having a plurality of slits or holes such that the exhaust gas is introduced with a uniform speed distribution.

21. The system of claim 13, wherein the carbon dioxide reaction product comprises sodium carbonate (Na₂CO₃) or sodium bicarbonate (NaHCO₃).

22. The system of claim 13, wherein the separator comprises:
a centrifuge configured to separate the waste solution and the carbon dioxide reaction product containing sodium carbonate (Na₂CO₃) or sodium bicarbonate (NaHCO₃) from the reaction product; and
a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

23. The system of claim 13, wherein the carbon dioxide capture equipment further comprises:
a monitoring part configured to monitor a level and a pH of the basic alkali mixture solution in the absorption column; and
a controller configured to adjust a supply amount of the basic alkali mixture solution by the monitoring part.

24. The system of claim 13, wherein, in the absorption column, carbon dioxide transferred from the shift reactor is atomized into micro bubbles by passing through a mesh net mounted on the lower portion of the absorption column, the basic alkali mixture solution supplied inside the absorption column from the mixer through a pipe is sprayed upwardly as a fountain shape through a plurality of nozzles which is mounted on a first side of the pipe and which is disposed to be spaced apart from each other at a predetermined distance and then the basic alkali mixture solution is atomized into micro droplets, and carbon dioxide is captured as the basic alkali mixture solution that is atomized reacts with carbon dioxide that is atomized, the pipe being mounted such that the pipe crosses an upper portion of the absorption column.
